Europäisches Patentamt

European Patent Office

Office européen des brevets

(11) Publication number: **0 414 510 A1**

# EUROPEAN PATENT APPLICATION

(21) Application number: 90309182.5

(51) Int. Cl.5: **F16L 3/11, F16L 3/24**

(22) Date of filing: 22.08.90

(30) Priority: 22.08.89 GB 8919048

(43) Date of publication of application:
27.02.91 Bulletin 91/09

(84) Designated Contracting States:
BE DE FR GB IT NL

(71) Applicant: Skelley, Christopher Richard
2 Glendyne Close
East Grinstead, East Sussex RH9 4NP(GB)

Applicant: Thatcher, Charles Edward
2 Glendyne Close
East Grinstead, East Sussex RH9 4NP(GB)

(72) Inventor: Skelley, Christopher Richard
2 Glendyne Close
East Grinstead, East Sussex RH9 4NP(GB)
Inventor: Thatcher, Charles Edward
2 Glendyne Close
East Grinstead, East Sussex RH9 4NP(GB)

(74) Representative: Wright, Hugh Ronald et al
Brookes & Martin 52/54 High Holborn
London WC1V 6SE(GB)

(54) **Cable cleat.**

(57) The invention provides a clamp, for a cable or the like, adapted to be mounted upon a mounting member (21) of open channel shaped cross-section, and having two spaced generally parallel edges (18,19); the clamp comprising an openable clamp section (13) arranged to receive the cable, closing means (29) to close the clamping section to retain the cable therein, and the mounting means (29) to mount the clamp on the mounting member, in which the clamping section is formed with abutment means (36,37) each shaped to engage with a respective one of the spaced edges of the mounting member to locate the clamping section thereon.

In a further aspect of the invention provides a clamp, for a cable or the like, adapted to be mounted upon a mounting member (21) of open channel shaped cross-section, and having two spaced generally parallel edges (18,19); the clamp comprising an openable clamp section (13) arranged to receive the cable, closing means (29) to close the clamping section to retain the cable therein, and mounting means (29) to mount the clamp on the mounting member, in which the clamping section is formed of a synthetic plastics material which upon combustion produces fumes which are halogen free.

Fig. 1.

# CABLE CLEAT

The present invention relates to a cable cleat.

Cable clamps are widely used to mount cables, for example to a wall or rack. Although not restricted thereto, we will describe a cable clamp for mounting a wide range of sizes of cable, between 5mm and 150mm in diameter. Such cable clamps are widely used, and are mounted to channel sections which may be attached to a wall, or form part of racking.

Such cable clamps are generally in two sections which are moveable towards one another to clamp a cable therebetween, and may be made of aluminium alloy or plastics material. For many purposes plastics material is preferred in view of its inherently non-conducting nature.

A number of problems have arisen with currently available cables clamps both with regard to the ease of mounting the cable clamp to the channel section and also with regard to the fire resistance and toxicity of the material of the clamp.

According to one aspect, the present invention provides a clamp, for a cable or the like, adapted to be mounted upon a mounting member of open channel shaped cross-section, and having two spaced generally parallel edges; the clamp comprising an openable clamp section arranged to receive the cable, closing mean to close the clamping section to retain the cable therein, and mounting means to mount the clamp on the mounting member, in which the clamping section is formed with abutment means shaped to engage with both the spaced edges of the mounting member to locate the clamping section thereon.

The invention provides according to another aspect a clamp, for a cable or the like, adpated to be mounted upon a mounting member of open channel shaped cross-section, and having two spaced generally parallel edges; the clamp comprising an openable clamp section arranged to receive the cable, closing means to close the clamping section to retain the cable therein, and mounting means to mount the clamp on the mounting member, in which the clamping section is formed of a synthetic plastics material which upon combustion produces fumes which are halogen free.

The plastics material preferably is such that products of combustion do not include hydrogen cyanide or sulphur dioxide or hydrogen fluoride or hydrogen chloride. The plastics material is preferably nylon 6.

Commonly the generally parallel edges of the mounting member are rolled over to form a semicircular radiussed cross section and in this case, the abutment means may include a cross section such as two parallel edges (for example formed by two chamfered edges of a protrusion such as a boss), or preferably, a part circular cross section channel to engage the rolled edges. The mounting means may also include a retaining means to engage abutments formed in the mounting member by the rolled over edges; so that the cable cleat, in use, is firmly connected to the overhead channel section by the clamping action between the clamp acting on the underside of the rolled over section and the shaped means engaging the forward facing surface of the rolled edges.

The shaped means are preferably moulded into the material of the cable clamp.

The plastics material is preferably flame retardant, preferably provides low smoke, and zero halogen under combustion, and preferably, during thermal decomposition, only carbon dioxide, carbon monoxide, water and oxides of nitrogen and no hydrogen cyanide, sulphur dioxide, hydrogen fluorideare formed as combustion and decomposition products.

In order to promote a fuller understanding of the above and other aspects of the invention, two embodiments of the invention will now be described by way of example only, and with reference to the accompanying drawings in which:

Figure 1 is a side elevation of a first cable clamp mounted to a U-section channel,

Figure 2 is an end elevation of the cable clamp of Figure 1 (although in this case mounted at right angles with respect to the U-section channel of Figure 1),

Figure 3 is a plan view of the cable clamp of Figures 1 and 2,

Figure 4 is a side elevation of an alternative cable clamp, and,

Figures 5 and 6 are an end elevation and a plan views of the cable clamp of Figure 4.

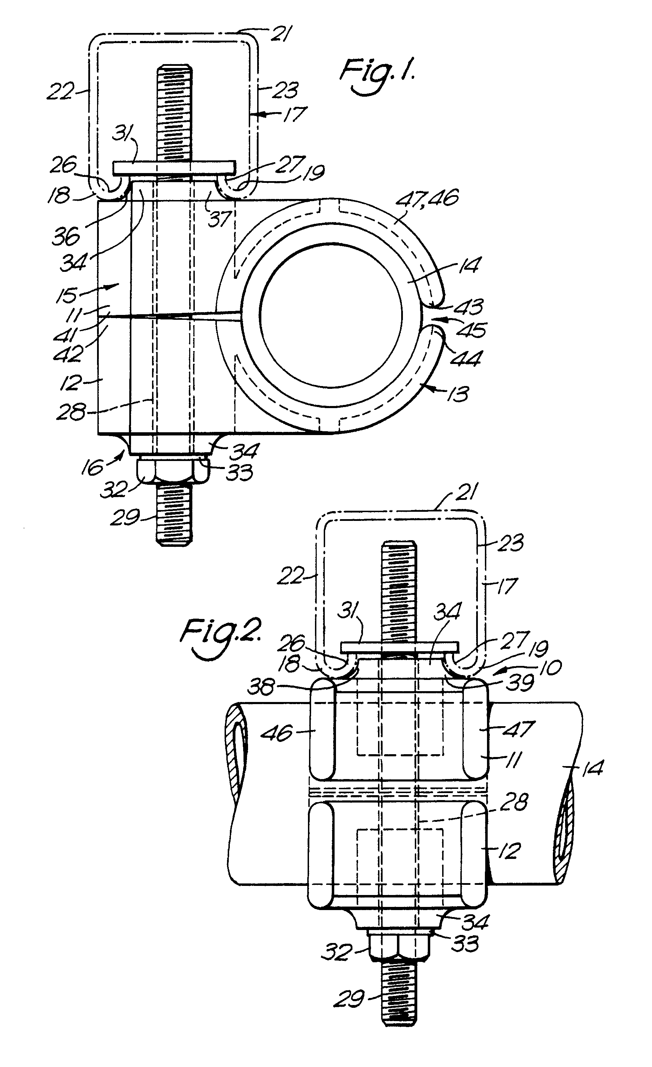

Referring to Figure 1, there is illustrated a cable clamp 10 which is made of two identical parts 11,12, moulded of a suitable plastics material which is a self extinguishing polyamide, known as nylon 6.

In particular, the properties of this plastics material are that it is self-extinguishing, emits low or zero smoke, with no halogen, it does not contain halogen or phosphorous components or heavy metals such as antimony. Thus, its products of combustion are carbon dioxide and some nitrogen oxides, and it does not produce hydrogen cyanide or sulphur dioxide, or hydrogen fluoride, or hydrogen chloride.

The cable clamp 10 comprises an openable cylindrical clamping section 13 in which, as can be seen, a cable 14 is clamped. The cable clamp 10 may be of a variety of sizes so as to support a cable which may be between 5mm and 82mm diameter, or even up to 150mm diameter. There is also provided mounting means 16 for mounting the cable clamp 10 to an open channel section 17 and a body section 15. The open channel section includes two spaced parallel forward facing edges 18,19. The open channel section 17 is normally formed of a folded galvanised steel sheet, the channel section 17 including a base section 21, and two side sections 22,23 extending therefrom which form the forward facing edges 18,19. The forward facing edges 18,19 are in fact formed by rolled over semi-circular sections 26,27.

The mounting means 16 further comprises a bore 28 passing through the body 15 of the two parts 11,12 through which extends a threaded rod 29, the threaded rod 29 screw threadedly mounting a reatining plate 31 which extends within the open channel section 17 to engage behind abutments formed by the rolled over sections 26,27, and, at the opposite end of the bore 28, a nut 32 and washer 33.

It will be noted that each part 11,12 incorporates part of the body section 15, and the shape of the two parts 11,12 forming the body section 15 is such that their edges 41,42 remote from the cylindrical clamping section 13 engage with one another.

The part of the body section 15 engaging with the open channel section 17 is shaped (as is clear from Figure 1) so as to provide a boss 34 having two chamfered edges 36, the chamfered edges 36 being spaced apart from one another and being of curved section so as to snugly fit with the rolled over sections 26,27. At right angles to the chamfered edges 36,37, the boss 34 includes further chamfered edges 38,39 which are shaped and spaced in the same way as the chamfered edges 36,37.

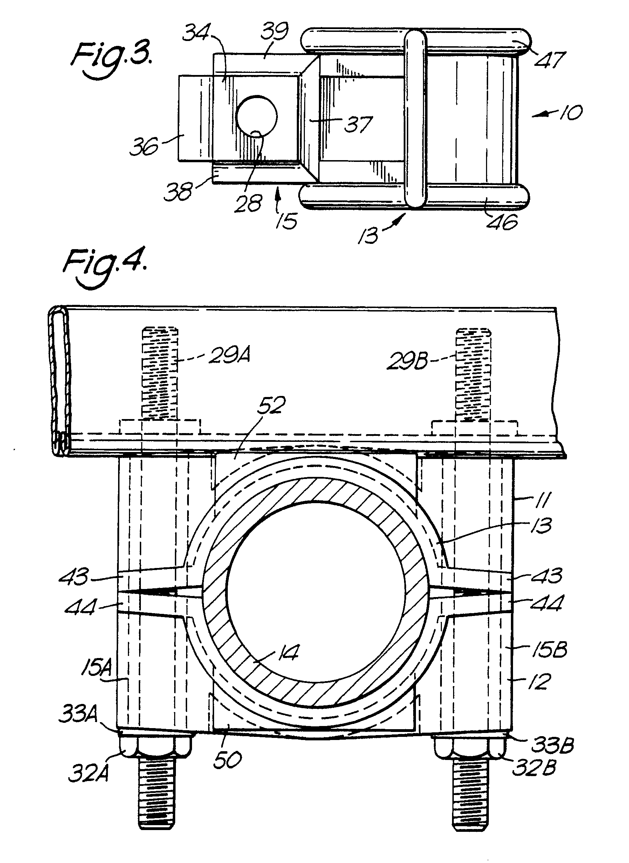

Figures 2 and 3 show an end elevation and plan of the cable clamp 10 of Figure 1 from which the various shapes can be established.

Referring now to Figure 1, in use, therefore, the two parts 11,12 of a cable clamp 10 are assembled together by passing a threaded rod 29 through the bore 28 formed in both parts 11,12, the threaded rod 29 carrying the clamp plate 31. The clamp plate 31 is then engaged with the open channel section 17 so as to extend behind the rolled over sections 26,27 and a washer 33 and nut 32 are then engaged on the free opposite end of the threaded rod 29. Initially, it is possible to move the two parts 11,12 away from one another along the threaded rod 29 so as to enable to the cable 14 to be engaged with the cylindrical clamping section 13. Once the cable has been engaged with the cylindrical clamping section 13, the nut 32 may be tightened on the threaded rod 29. In this way, the two parts 11,12 are moved towards one another and initially the edges 41,42 of the body sections of the two parts 11,12 will engage with one another. As the nut 32 is further tightened, the two parts 11,12 tend to pivot about these edges 41,42 to close the cylindrical clamping section 13, although in practice the clamping section 13 not usually completely closed to form a complete circle, there always being provided some gap 45 between the two adjacent edges 43,44. The surfaces of the clamping section which engage the cable may have ridges aligned axially of the cable to enhance the grip on the cable.

As the nut 32 is tightened, therefore, the part 11 is pulled upwards (in Figure 1) into contact with the open channel section 17, and in particular, the chamfered edges 38,39 engage with the rolled over sections 26,27. Finally, when fully tight, the rolled over sections 26,27 are clamped between the clamp plate 31 and the chamfered edges 36,37 and the two parts 11,12 are clamped together between the nut 32 (and washer 33) and rolled over sections 26,27.

The chamfered edges 36,37, because of their shape and spacing, enable a proper clamping together of the cable clamp 10 and the open channel section 17, a connection which has only one proper clamped position and cannot slip from that position.

Referring to Figure 2 in particular, it will be seen that because there are two sets of chamfered edges 36,37; 38,39, it is possible to mount the cable clamp 10 in two directions at right angles with respect to the open channel section 17, and indeed in the arrangement shown in Figure 2, the cable clamp 10 is mounted to the open channel section 17 at right angles with respect to its mounting in Figure 1.

Referring to Figure 3, it will be seen that the cylindrical clamping section 13 is generally cylindrical in nature, but includes strengthening circular ribs 46,47 at the open sides of the clamping section 13. We now refer to the alternative arrangement of cable clamp illustrated in Figures 4 to 6. Similar parts carry the same reference numerals as in the earlier arrangement.

In this arrangement, however, the cable clamp 10 comprises two parts 11,12 which are of saddle-like shape. Thus each part 11,12 has a part which, together form a cylindrical clamping section 13, but there are, effectively two body sections 15A,15B, disposed on either side of the cylindrical clamping section 13. There are provided two bores 28A,28B, and thus two rods 29A,29B, two nuts 32A,32B, and two washers 33A,33B, and two clamp plates 31A,31B. The arrangement is clear from Figure 4 and thus far is generally conventional. There are provided two pairs of edges 41,42 on opposite sides of the relevant body sections 15A,15B, which act, as in the first embodiment, to allow a clamping action of the cylindrical clamping section 13.

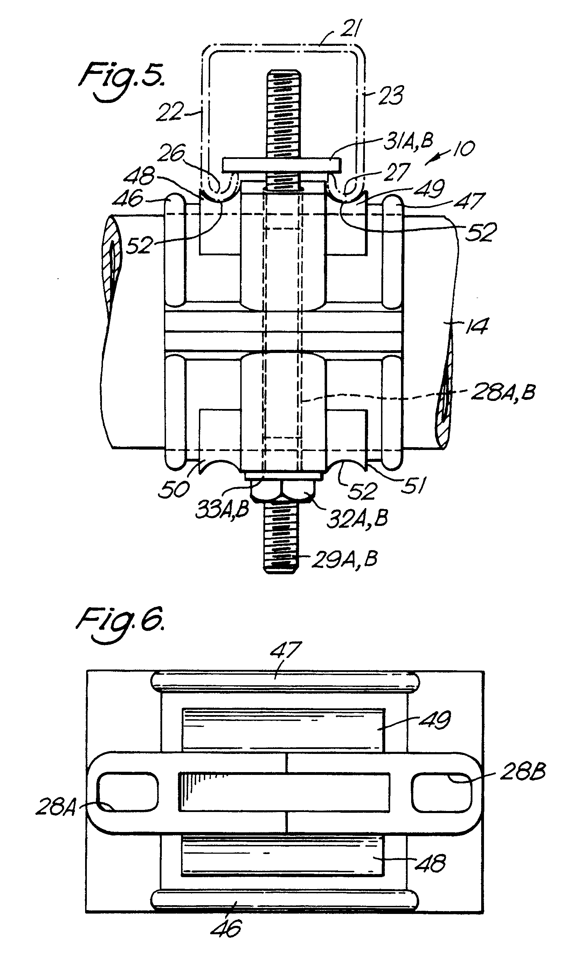

However, in the present instance, it will be seen that four shaped shoulders 48-51, are provided on the cylindrical clamping section 13 the shoulders extending generally tangentially to the cylindrical clamping section 13. The shoulders 48-51 each include a semik cylindrical cross section groove 52, the shape of which is clear from Figure 5.

In use, therefore, of the arrangement of Figures 4-6, the cable 14 is engaged with the cylindrical clamping section 13 and the two parts 11,12 of the cable clamp 10 are threaded onto a pair of threaded rods 29A,29B. Each rod carryies a clamp plate 31, the clamp plate being engaged behind the rolled over sections 26,27 of an open channel section 17. Nuts 32A,32B and washers 33A,33B are engaged with the free end of each threaded rod 29A,29B.

The nuts 32A,32B are then tightened down which initially brings the two parts 11,12, into engagement with one another, and then subsequently brings the two cylindrical cross section grooves 52 of the shoulders 48,49, into engagement with the rolled over sections 26,27. Once again, it will be seen that the shoulders 48,49, are spaced apart by a distance so that the semi-cylindrical cross section grooves 52 properly engage with the rolled over sections 26,27. As before, when the nuts 32 are fully tightened, the cable 14 is firmly held by the cylindrical clamping section 13, and the cable clamp 10 is mounted to the open channel section 17 by means of engagement of the rolled over sections 26,27, between the two clamp plates 31 and the grooves 52.

The invention is not restricted to the details of the foregoing example.

## Claims

1. A clamp, for a cable or the like, adapted to be mounted upon a mounting member (21) of open channel shaped cross-section, and having two spaced generally parallel edges (18,19); the clamp comprising an openable clamp section (13) arranged to receive the cable, closing means (29) to close the clamping section to retain the cable therein, and mounting means (29) to mount the clamp on the mounting member, in which the clamping section is formed with abutment means (36,37) each shaped to engage with a respective one of the spaced edges of the mounting member to locate the clamping section thereon.

2. A clamp as claimed in Claim 1, in which said two edges are radiussed (26, 27) and said abutment means comprise correspondingly radiussed grooves in the clamp section.

3. A clamp as claimed in Claim 1 or 2, in which said mounting means and said closing means comprise a common screw-threaded rod (29) having retaining means (31) to retain it in said mounting member and an associated screw-threaded nut (32) tightening of which on the rod achieves such mounting and closing.

4. A clamp as claimed in Claim 1 or 2, in which said mounting means and said closing means comprise two common screw-threaded rods (29) which in use are disposed one on either side of the cable, each having retaining means (31) to retain it in said mounting member and a respective screw- threaded nut (32) tightening of which on the rod achieves such mounting and closing.

5. A clamp as claimed in Claim 3 or 4, in which each said retaining means comprises a plate (31) attached to said rod and adapted to engage upon abutments formed adjacent said edges in the cross-section of said mounting member.

6. A clamp as claimed in any preceding Claim, in which said clamp section comprises two parts (11, 12) which in use together encompass the cable to so receive it.

7. A clamp as claimed in Claim 6, in which each of said two parts includes a part cylindrical surface adapted to engage the surface of the cable.

8. A clamp as claimed in Claim 7, in which said part cylindrical surfaces each have ridges which extend axially of the cable in use to enhance the grip of the clamp on the cable.

9. A clamp as claimed in Claim 7 or 8, in which said two parts are the same.

10. A claim as claimed in Claim 6, 7, 8 or 9, as dependent upon Claim 3 or 4, in which said two parts have opposing faces areas (41, 42) of which engage adjacent each such threaded rod at a position remote from the cable, so that tightening of the or each nut clamps a cable in the clamping section with the two parts pivoting or deflecting substantially about such areas.

11. A clamp as claimed in any preceding Claim, in which said abutment means are formed as chamfers or radii at the sides of a raised boss (34) on the clamp section.

12. A clamp as claimed in Claim 11, in which said boss is rectangular.

13. A clamp as claimed in any one of Claims 1 to 10, in which said abutment means are formed as radiussed grooves (52) formed in said clamp section.

14. A clamp as claimed in any preceding Claim, in which said clamp section is formed of a synthetic plastics material which on combustion produces fumes which are free of halogens.

15. A clamp as claimed in Claim 14, in which said plastics material is nylon 6 polyamide.

16. A clamp, for a cable or the like, adapted to be mounted upon a mounting member (21) of open channel shaped cross-section, and having two spaced generally parallel edges (18,19); the clamp comprising an openable clamp section (13) arranged to receive the cable, closing means (29) to close the clamping section to retain the cable therein, and mounting means (29) to mount the clamp on the mounting member, in which the clamping section is formed of a synthetic plastics material which upon combustion produces fumes which are halogen free.

17. A clamp as claimed in Claim 16, in which said plastics material is nylon 6 poly amide.

Fig. 1.

Fig. 2.

Fig.3.

Fig.4.

Fig.5.

21

22

23

26

31A,B

10

48

27

46

49

47

52

52

14

28A,B

50

52

51

33A,B

32A,B

29A,B

Fig.6.

47

49

28B

28A

48

46

European
Patent Office

Application Number

**EP 90 30 9182**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,A | US-A-4 185 802 (MYLES ET AL.)<br>* column 3, line 8 - column 4, line 36; figures * | 1,2,16 | F 16 L 3/11<br>F 16 L 3/24 |
| A | FR-A-2 234 805 (AMIEL)<br>* the whole document * | 1,4-7,9,<br>16 | |
| A | EP-A-0 244 673 (HUNGERFORD)<br>* column 3, line 1 - column 4, line 31; figures * | 1-2 | |
| A | US-A-3 146 982 (BUDNICK)<br>* the whole document * | 1,6,9,16 | |
| | | | **TECHNICAL FIELDS SEARCHED (Int. Cl.5)** |
| | | | F 16 L |

The present search report has been drawn up for all claims

| Place of search | Date of completion of search | Examiner |
|---|---|---|
| The Hague | 05 December 90 | NARMINIO A. |